# DEMANDE DE BREVET EUROPEEN

(11) **EP 2 811 197 A1**
(43) Date de publication de la demande: **10.12.2014**
(21) Numéro de dépôt: 13380055.7
(22) Date de dépôt: 25.11.2013
(51) Int. Cl.: F16F 1/18

(54) **Ressort de suspension tubulaire**

(30) Priorité: 06.06.2013 ES 201330845
(71) Demandeur: Fundiciones de Vera, S.A., 31780 Vera De Bidasoa (Navarra) (ES)
(72) Inventeur: Encio Martinez, Jose Luis, 31780 Vera DE Bidasoa(Navarra) (ES)
(74) Mandataire: Urizar Barandiaran, Miguel Angel

(57) **Abrégé**

Ressort de suspension tubulaire, structuré en un corps allongé (1) qui présente une cavité intérieure (11) de coupe variable dans ses différentes zones longitudinale les parois de cette cavité intérieure (11) pouvant maintenir ses épaisseurs constantes ou variables le long de son axe longitudinal.

Ce corps allongé (1) définit des conformations (12) pour monter des éléments complémentaires et/ou les solutions d'ancrage pour être fixé à l'essieu ou au châssis des véhicules, et se présente en une seule pièce.

La cavité intérieure (11) du corps allongé (1) peut avoir une configuration ouverte par au moins une de ses extrémités ou fermée par un ou deux extrémités.

De plus, dans au moins une des extrémités du corps allongé (1) l'on peut pratiquer ou conformer une tête d'appui (2).

## Description

### OBJET DE L'INVENTION

L'objet de l'invention fait référence à un ressort de suspension tubulaire à coupe variable.

### ANTÉCÉDANTS DE L'INVENTION

Dans l'actuel état de la technique, différents ressorts de suspension sont connus. Par exemple et entre autres, des ressorts de suspension sont décrits dans les documents de brevet EP0956981 et EP2455635.

Les ressorts de suspension connus peuvent être fabriqués en un seul matériau (comme, par exemple, celui décrit dans le document EP1037756) ou en plusieurs matériaux (comme, par exemple, celui décrit dans le document EP0956981). Dans chacun des cas, un problème non résolu est qu'ils sont massifs et, par conséquent, très lourds.

### DESCRIPTION DE L'INVENTION

L'objet de l'invention résout ce problème : il préconise une ressort de suspension d'un seul matériau qui présente une configuration tubulaire et une coupe variable de sorte que, en maintenant les mêmes prestations des ressort de suspension connus, il emploie moins de matériau, le poids est donc réduit/allégé d'environ 40% ou plus par rapport à ceux-ci. Il est caractérisé par sa structure en un corps allongé qui présente une cavité intérieure de coupe variable dans ses différentes zones longitudinales ; les parois de cette cavité intérieure pouvant maintenir des épaisseurs constantes ou variables le long de son axe longitudinal.

Il se caractérise aussi parce que ce corps allongé, qui présente la configuration requise pour les ressorts de suspension dans chaque cas, définit des conformations pour monter des éléments complémentaires et/ou des solutions d'ancrage pour être fixé à l'essieu ou au châssis des véhicules et se compose d'une seule pièce.

À partir de cette structure de base, toutes les réalisations alternatives n'altérant pas, ni ne changeant ou ne modifiant pas le fondement proposé sont incluses dans l'objet de l'invention. En particulier, il est indifférent aux effets de l'invention et est inclus dans l'objet de ce dernier:
- que la cavité intérieure ait une configuration ouverte avec, au moins, une ouverture dans une des extrémités, où entrent en contact directement ou indirectement deux parties opposées du corps allongé; ou
- que la cavité intérieure du corps allongé ait une configuration fermée.

Il est aussi indifférent aux effets de l'invention et est inclus dans son objet que le corps allongé soit fermé par, au moins, une de ses extrémités au moyen d'une tête, définie:
- par un enroulement formé latéralement dans l'extrémité du corps même; ou
- par une zone élargie où est disposée une pièce complémentaire de fermeture.

Dans chacune de ces réalisations, la dite tête peut présenter une configuration ouverte ou fermée.

De même, dans chacune de ses réalisations, dans au moins une des extrémités du corps allongé est pratiquée ou conformée une tête d'appui, qui dépasse du corps allongé même vers un ou deux côtés.

Il est indifférent pour l'invention que cette tête d'appui, qui est un prolongement, soit un prolongement prolongé vers les deux côtés du corps allongé ou vers un seul côté.

Il est aussi inclus dans l'objet de l'invention que les deux extrémités du ressort de suspension aient des géométries semblables ou des géométries différentes.

D'autres configurations et avantages de l'invention peuvent être déduits à partir de la description suivante, et des revendications dépendantes.

### DESCRIPTION DES FIGURES

Dans le but de mieux comprendre l'objet de l'invention, une forme préférentielle de réalisation, susceptible de changements accessoires ne dénaturant pas son fondement est représentée sur les figures jointes. Dans ce cas:

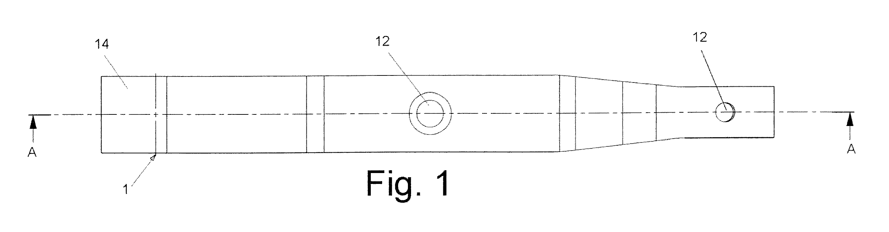

La figure 1 représente une vue générale schématique en plan d'un ressort de suspension conforme à l'invention, pour un exemple de réalisation.
La figure 2a représente une coupe, selon l'indication A:A de la figure 1 pour un exemple de réalisation ouverte par une extrémité.
La figure 2b représente une coupe, selon l'indication A:A de la figure 1 pour un exemple de réalisation fermée par les deux extrémités.
La figure 3 représente une coupe partielle levée, avec une ouverture (13) dans laquelle les deux parties opposées (1a) (1 b) du corps (1) entrent en contact directement et sont adossées.
La figure 4 représente une coupe partielle levée, avec une ouverture (13) dans laquelle les deux parties opposées (1a) (1b) du corps (1) entrent en contact indirectement : elles sont espacées en heurtant dans une pièce intermédiaire (4) intercalée entre elles.
La figure 5 représente une vue générale en plan d'un ressort de suspension conforme à l'invention, pour un autre exemple de réalisation, avec une tête d'appui (2) qui dépasse latéralement du corps allongé même (1) dans une des extrémités;
La figure 6 représente une coupe, selon l'indication B:B de la figure 5, pour observer la configuration et les particularités de la zone allongée (15) où est disposée une pièce complémentaire de fermeture (3).

### FORME DE RÉALISATION PRÉFÉRENTIELLE

Ci-dessous est décrit un exemple de réalisation pratique, non restrictive, de la présente invention. D'autres modes de réalisation dans lesquels sont introduits des changements accessoires ne dénaturant pas son fondement ne sont absolument pas écartées.

L'objet de l'invention est un ressort de suspension tubulaire, structuré en un corps allongé (1) qui présente une cavité intérieure (11) à coupe variable dans ses différentes zones longitudinales.

Le corps (1) est réalisé en une seule pièce et présente la configuration/géométrie requise pour les ressorts de suspension dans chaque cas concret, selon les besoins.

Les parois qui délimitent cette cavité intérieure (11) peuvent présenter, indistinctement et selon chaque besoin concret, des épaisseurs constantes ou variables le long de son axe longitudinal.

Le dit corps allongé (1) définit des conformations (12) pour monter des éléments complémentaires et/ou des solutions d'ancrage pour se fixer à l'essieu des véhicules.

Ces conformations (12) peuvent atteindre ou non la dite cavité intérieure (11). Ce sont des exemples de conformations (12) depuis des orifices passants (pour tenir le ressort de suspension avec des goupilles) à des entailles (pour tenir le ressort de suspension avec des brides de fixation) en passant par des combinaisons des deux et leurs différentes géométries.

À partir de cette configuration générale, toutes les réalisations n'altérant pas, ni ne changeant ou ne modifiant pas le fondement proposé sont incluses dans l'objet de l'invention.

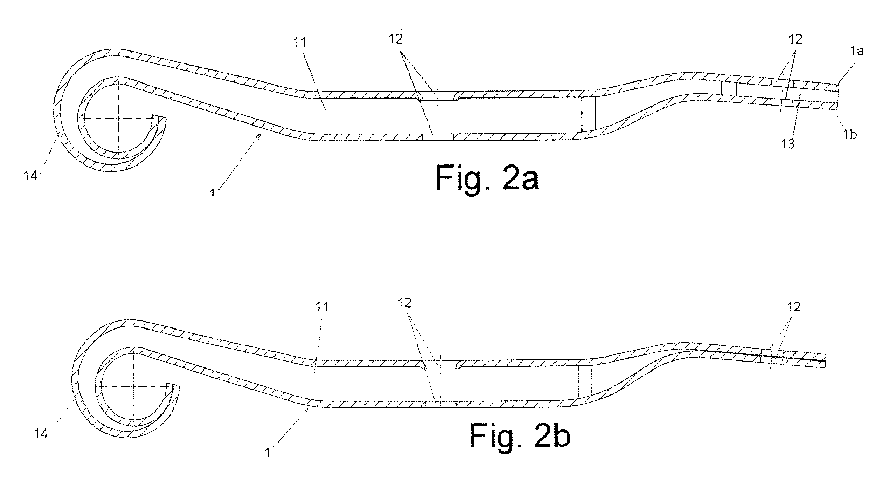

Selon l'exemple de réalisation de la figure 2a, la cavité intérieure (11) du corps allongé (1) présente une configuration ouverte avec, au moins, une ouverture (13) dans une des extrémités où les deux parties opposées (1a), (1b) du corps allongé (1) entrent en contact directement ou indirectement.

Il y a sur cette figure une ouverture (13) dans les deux extrémités, mais il est inclus dans l'objet de l'invention qui il y ait une ouverture (13) dans les deux extrémités ou dans une seule.

Selon l'exemple de réalisation de la figure 2b, la cavité intérieure (11) du corps allongé (1) présente une configuration fermée par une ou par les deux extrémités où les parties opposées (1a), (1 b) du corps allongé (1) entrent en contact directement ou indirectement.

Il y a sur cette figure une fermeture dans les deux extrémités, mais il est inclus dans l'objet de l'invention qui il y ait une fermeture dans les deux extrémités ou dans une seule.

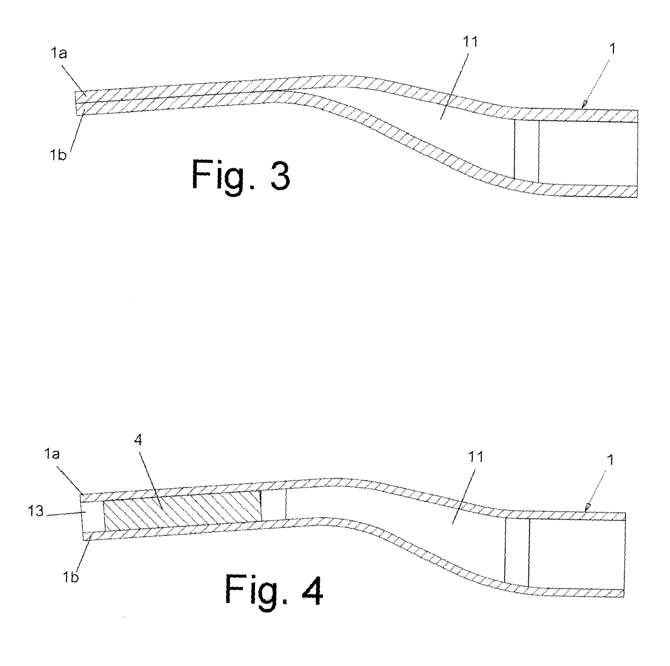

Différentes façons de mettre en pratique cette réalisation ont été représentées sur les figures 3 et 4:

Sur la figure 3, les deux parties opposées (1a) (1b) du corps (1) entrent en contact directement et sont adossées.

Sur la figure 4, les deux parties opposées (1a) (1b) du corps (1) entrent en contact indirectement et sont espacées en heurtant dans une pièce intermédiaire (4) intercalée entre elles.

La pièce intermédiaire (4) ne fait pas partie du corps allongé (1), bien qu'elle puisse en faire partie, sans modifier pour cela le fondement de l'invention.

Selon l'exemple de réalisation des figures 2a et 2b, le corps allongé (1) termine, au moins, une de ses extrémités au moyen d'une tête (14), définie par un enroulement formé dans l'extrémité du corps même (1). Dans cet exemple de réalisation, la tête (14) du ressort de suspension fait partie du corps allongé (1).

Dans l'exemple de réalisation avec une tête (14) il est inclus dans l'objet de l'invention indifféremment que la tête (14) ait une ouverture (13) ou qu'elle ne l'ait pas.

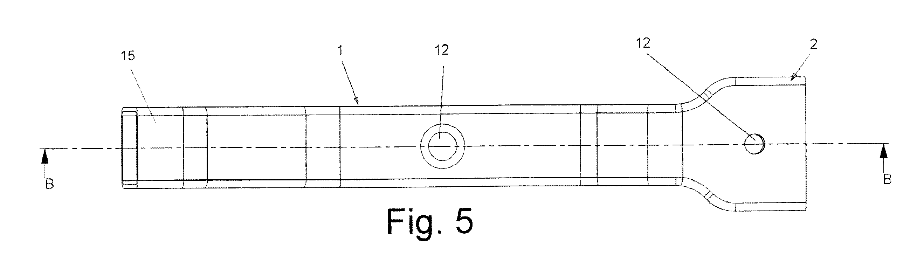

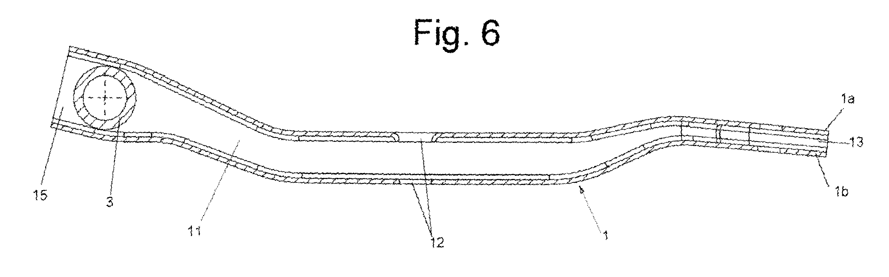

Selon l'exemple de réalisation des figures 5 et 6, le corps allongé (1) définit, au moins dans une de ses extrémités, une zone élargie (15) où est disposée une pièce complémentaire de fermeture (3). Dans cet exemple de réalisation, la tête proprement dite du ressort de suspension est l'ensemble défini par la zone élargie (15) et la pièce complémentaire (13).

La pièce complémentaire (3) ne fait pas partie du corps allongé (1), bien qu'elle puisse l'être sans modifier pour cela le fondement de l'invention.

De plus, et dans chacun des exemples de réalisation, dans au moins une des extrémités du corps allongé (1) est pratiquée ou conformée une tête d'appui (2) qui dépasse du corps allongé même (1).

Selon l'exemple de réalisation de la figure 6, cette tête d'appui (2) est un élargissement dans l'extrémité du corps allongé même (1) et vers les deux côtés, bien qu'il soit indifférent et soit inclus dans l'objet de l'invention que la tête d'appui (2) soit définie par le prolongement vers un seul côté.

Les matériaux, dimensions, proportions et, en général, tous les autres détails accessoires ou secondaires n'altérant pas, ni ne changeant ou ne modifiant pas le fondement proposé pourront être variables.

Les termes dans lesquels est rédigé ce mémoire sont certains et reflètent fidèlement l'objet décrit, et doivent être entendus dans leur sens le plus vaste et ceci jamais de manière restrictive.

## Revendications

1. Ressort de suspension tubulaire, **caractérisé par le fait qu'**il se structure en un corps allongé (1) qui présente une cavité intérieure (11) à coupe variable dans ses différentes zones longitudinales ; les parois de cette cavité intérieure (11) pouvant maintenir leurs épaisseurs constantes ou variables le long de son axe longitudinal.

2. Ressort de suspension tubulaire, selon la revendication 1, **caractérisé par le fait que** ce corps allongé (1), qui présente la configuration requise pour les ressorts de suspension dans chaque cas, définit des conformations (12) pour monter des éléments complémentaires et/ou les solutions d'ancrage pour être fixé à l'essieu ou au châssis des véhicules.

3. Ressort de suspension tubulaire, selon une des revendications précédentes, **caractérisé par le fait que** le corps allongé mentionné (1) est fabriqué en une seule pièce.

4. Ressort de suspension tubulaire, selon une des revendications 1 à 3, , **caractérisé par le fait que** la dite cavité intérieure (11) du corps allongé (1) a une configuration ouverte avec, au moins, une ouverture (13) dans une des extrémités, où entrent en contact directement ou indirectement deux parties opposées (1 a), (1 b) du corps allongé (1).

5. Ressort de suspension tubulaire, selon une des revendications 1 à 3, **caractérisé par le fait que** la dite cavité intérieure (11) du corps allongé (1) présente une configuration fermée.

6. Ressort de suspension tubulaire, selon la revendication 5, **caractérisé par le fait que** le corps allongé (1) est fermé par, au moins, une de ses extrémités au moyen d'une tête (14) définie par un enroulement formé dans l'extrémité du corps même (1).

7. Ressort de suspension tubulaire, selon la revendication 5, **caractérisé par le fait que** le corps allongé (1) définit, au moins, dans une de ses extrémités, une zone élargie (15) où l'on dispose une pièce complémentaire de fermeture (3).

8. Ressort de suspension tubulaire, selon une des revendications précédentes, **caractérisé par le fait que** dans au moins une des extrémités du corps allongé (1) l'on dispose, pratique ou conforme une tête d'appui (2) qui dépasse du corps allongé même (1).

9. Ressort de suspension tubulaire, selon la revendication 8, **caractérisé par le fait que** la tête d'appui (2) est un élargissement prolongé vers un des côtés du corps allongé (1).

10. Ressort de suspension tubulaire, selon la revendication 8, **caractérisé par le fait que** la tête d'appui (2) est un élargissement prolongé vers les deux côtés du corps allongé (1).
